Europäisches Patentamt

European Patent Office

Office européen des brevets

(11) Numéro de publication : **0 494 000 A1**

## (12) DEMANDE DE BREVET EUROPEEN

(21) Numéro de dépôt : **91403437.6**

(22) Date de dépôt : **18.12.91**

(51) Int. Cl.⁵ : **G01N 17/00**

(30) Priorité : **31.12.90 FR 9016544**

(43) Date de publication de la demande :
**08.07.92 Bulletin 92/28**

(84) Etats contractants désignés :
**AT BE CH DE DK ES GB GR IT LI LU MC NL SE**

(71) Demandeur : **GAZ DE FRANCE**
**23, rue Philibert Delorme**
**F-75017 Paris (FR)**

(72) Inventeur : **Bressan, Joelle**
**145 Avenue Jean-Jaurès**
**F-93110 Rosny Sous Bois (FR)**

(74) Mandataire : **Thévenet, Jean-Bruno et al**
**Cabinet BEAU DE LOMENIE 55 rue**
**d'Amsterdam**
**F-75008 Paris (FR)**

(54) **Installation d'essai de corrosion généralisée à haute température.**

(57)    L'installation comprend un ensemble (20) d'alimentation sélective en liquide, un ensemble (10) d'alimentation sélective en gaz sous pression, un ensemble (30,40,50) de mélange et préchauffage comprenant lui-même un étage vaporisateur (30), un étage mélangeur (40) et un étage préchauffeur (50) pour préchauffer jusqu'à une température de l'ordre de 150°C à 300°C le mélange gaz-vapeur, et un ensemble (60) de répartition du flux de mélange gaz-vapeur vers une pluralité de circuits (70) d'essai de corrosion généralisée à haute température. Chacun des circuits d'essai (70) comprend un réacteur comportant un étage préchauffeur intermédiaire (72) pour préchauffer jusqu'à une température de l'ordre de 400°C à 600°C le mélange gaz-vapeur appliqué au réacteur, et un étage de chauffage final (73) contenant au moins un échantillon (76) de matériau à tester qui est mis en contact avec le flux de mélange gaz-vapeur issu de l'étage préchauffeur intermédiaire (72) et porté dans l'étage de chauffage final (73) à une température comprise entre environ 700°C et 850°C.

FIG.1

EP 0 494 000 A1

La présente invention concerne une installation d'essai aux fins d'études de corrosion généralisée à haute température, pouvant inclure la corrosion sous contrainte.

On a déjà proposé d'effectuer en laboratoire des études des phénomènes de corrosion localisée par piqûration, à l'aide de cellules électrochimiques à paroi de verre, dans des conditions de température n'excédant pas environ 100°C.

Il a également été réalisé des matériels de laboratoire destinés à étudier les phénomènes de corrosion sous contrainte, dans des conditions opératoires d'environnement assez sévères correspondant à des températures inférieures à 200°C et des pressions inférieures à 10 MPa. Ces matériels comprennent un réacteur unique dont la structure n'est toutefois pas adaptée pour permettre d'effectuer des études de corrosion généralisée à des températures pouvant être de l'ordre de 600 à 900°C environ.

C'est pourquoi, il n'a jusqu'à présent pas été possible d'étudier en laboratoire de façon commode et simple, les phénomènes de corrosion généralisée pour des températures allant au delà de 200°C environ.

La présente invention a précisément pour objet de remédier aux inconvénients précités et de permettre d'effectuer, dans une installation d'encombrement réduit, des études de corrosion généralisée dans des conditions d'agressivité variées de milieux liquides et gazeux, sous pression et à très haute température.

L'invention a encore pour objet de permettre de réaliser, avec des installations de conception similaire, aussi bien des études de corrosion généralisée que des études de corrosion sous contrainte.

Ces buts sont atteints grâce à une installation d'essai de corrosion généralisée à haute température, caractérisée en ce qu'elle comprend un ensemble d'alimentation sélective en liquide, un ensemble d'alimentation sélective en gaz sous pression, un ensemble de mélange et préchauffage comprenant lui-même un étage vaporisateur pour vaporiser le liquide reçu de l'ensemble d'alimentation en liquide, un étage mélangeur pour réaliser un mélange des gaz sous pression reçus dans l'ensemble d'alimentation en gaz et de la vapeur produite dans ledit étage vaporisateur et un étage préchauffeur pour préchauffer jusqu'à une température de l'ordre de 150°C à 300°C le mélange gaz-vapeur issu dudit étage mélangeur, un ensemble de répartition du flux de mélange gaz-vapeur issu de l'étage préchauffeur vers une pluralité de circuits d'essai de corrosion généralisée à haute température, chacun desdits circuits d'essai comprenant un réacteur comportant un étage préchauffeur intermédiaire pour préchauffer jusqu'à une température de l'ordre de 400°C à 600°C le mélange gaz-vapeur appliqué au réacteur, et un étage de chauffage final contenant au moins un échantillon de matériau à tester qui est mis en contact avec le flux de mélange

gaz-vapeur issue l'étage préchauffeur intermédiaire et porté dans l'étage de chauffage final à une température comprise entre environ 700°C et 850°C, des moyens de refroidissement du mélange gaz-vapeur issu de chacun des circuits d'essai et un dispositif de séparation pour récupérer séparément la phase liquide et la phase gazeuse dudit mélange gaz-vapeur.

Avantageusement, l'ensemble de répartition comprend un dispositif amovible de répartition disposé à la sortie de l'étage préchauffeur pour produire un écoulement laminaire ou turbulent.

L'ensemble de répartition comprend une série de canalisations de dérivation en nombre égal au nombre de circuits d'essai, munies de résistances électriques chauffantes et de vannes d'arrêt et de purge.

Selon une caractéristique particulière, l'installation comprend des échangeurs de chaleur à circulation de liquide disposés entre l'ensemble de répartition et les réacteurs pour refroidir la partie amovible des circuits d'essai externe aux réacteurs à une température inférieure à environ 200°C.

Chaque réacteur comprend un corps unique en forme de doigt de gant intégrant l'étage préchauffeur intermédiaire et l'étage de chauffage final et dans lequel les divers éléments constitutifs sont introduits par le haut.

Chaque réacteur comprend au niveau de l'étage de chauffage final une garniture en céramique.

Pour une étude de corrosion généralisée, l'étage de chauffage final de chaque réacteur comprend avantageusement un porte-échantillons sur lequel les échantillons sont disposés selon une structure en hélice.

Dans le cas d'une application à l'étude de la corrosion sous contrainte, l'étage de chauffage final de chaque réacteur comprend un échantillon unique constitué par une éprouvette de traction et des moyens de traction sont prévus dans chaque circuit d'essai pour appliquer une contrainte prédéterminée sur chaque éprouvette de traction.

Des capteurs de force et d'allongement sont prévus dans chaque circuit d'essai pour contrôler la traction et l'allongement excercés sur chaque éprouvette de traction.

Selon une caractéristique avantageuse, lesdits moyens de traction comprennent des servo-moteurs de traction et un générateur de rampe de tension pour engendrer de façon contrôlée une rampe de contrainte continue à vitesse lente sur l'éprouvette de traction concernée.

L'installation d'essai peut fonctionner en boucle ouverte ou fermée. Dans ce dernier cas, les gaz appliqués à partir de l'ensemble d'alimentation sélective en gaz sous pression sont recyclés vers cet ensemble après passage dans les circuits d'essai et refroidissement.

Selon une caractéristique particulière, les moyens de refroidissement du mélange gaz-vapeur issu de chaque circuit d'essai comprennent des serpentins de refroidissement à air placés en sortie de chaque réacteur et un circuit réfrigérant commun à circulation d'eau.

De préférence, l'étage vaporisateur présente une structure en hélice pour le passage du liquide et des canaux axiaux pour le passage des gaz.

L'installation d'essai selon l'invention peut comprendre par exemple entre trois et cinq circuits d'essai.

Selon un exemple particulier de réalisation l'étage préchauffeur, l'étage préchauffeur intermédiaire et l'étage de chauffage final sont adaptés pour porter le mélange gaz vapeur à des températures respectivement de l'ordre de 200°C, 500°C et 800°C.

D'autres caractéristiques et avantages de l'invention ressortiront de la description suivante de modes particuliers de réalisation, donnés à titre d'exemples non limitatifs, en référence aux dessins annexés, sur lesquels :

– la figure 1 représente le schéma de l'ensemble d'une installation d'essai de corrosion généralisée à haute température selon l'invention.

– la figure 2 représente le schéma de l'ensemble d'une installation d'essai selon l'invention, appliquée plus particulièrement à l'étude de la corrosion sous contrainte,

– la figure 3 est une vue d'un ensemble de mélange et préchauffage utilisable dans le cadre des installations des figures 1 et 2,

– les figures 4,5 et 6 sont des vues de détail d'une entretoise montée dans l'ensemble de la figure 3, les figures 4 et 6 représentent des vues respectivement de dessous et de dessus et la figure 5 représentant une section selon la ligne V-V de la figure 4,

– la figure 7 est une vue plus détaillée en coupe axiale d'un réacteur de corrosion généralisée selon l'invention utilisable dans le cadre de l'installation de la figure 1,

– la figure 8 est une vue agrandie selon la flèche F de la figure 7, montrant le positionnement des échantillons sur un porte-échantillons,

– les figures 9 et 10 sont des vues respectivement en élévation et de dessous d'un dispositif réchauffeur mis en oeuvre dans le réacteur de la figure 7 au niveau de l'étage préchauffeur intermédiaire,

– la figure 11 est une vue plus détaillée en coupe axiale d'un réacteur de corrosion sous contrainte selon l'invention utilisable dans le cadre de l'installation de la figure 2,

– les figures 12 à 14 sont des sections respectivement selon les lignes XII-XII, XIII-XIII, et XIV-XIV de la figure 11 destinées à expliciter la structure du réacteur de la figure 11,

– la figure 15 est une vue en élévation montrant un exemple de dispositif de traction utilisable avec le réacteur de corrosion sous contrainte de la figure 11,

– la figure 16 est une vue de détail d'une partie du dispositif de la figure 15, et

– la figure 17 est un schéma montrant les circuits d'asservissement et d'exploitation des signaux de mesure dans le cadre d'une installation d'essai de corrosion sous contrainte telle que l'installation de la figure 2.

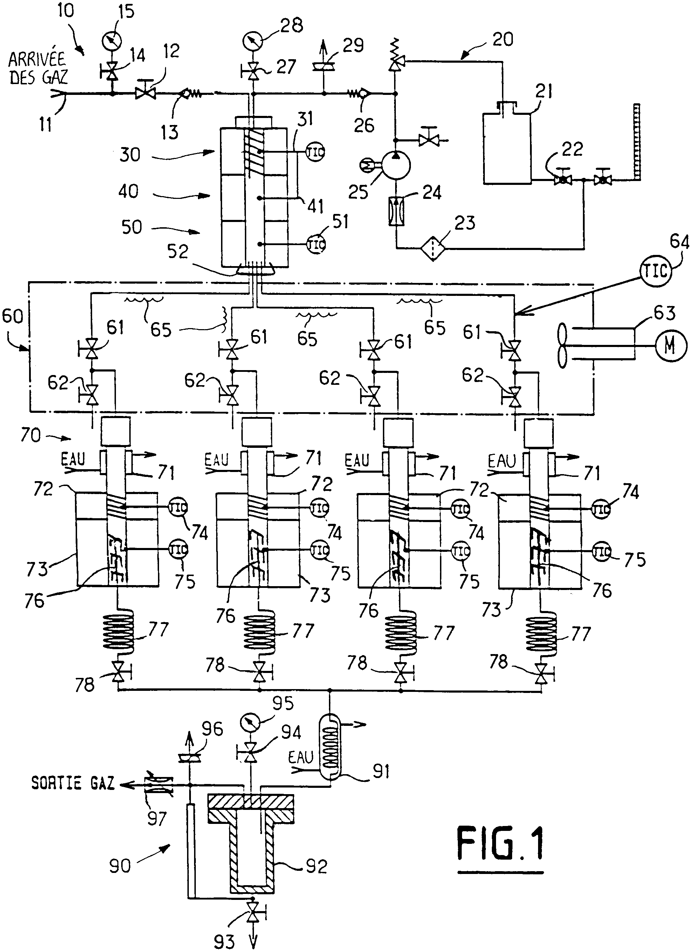

L'installation de la figure 1 comprend un ensemble 20 d'alimentation sélective en liquide avec un réservoir 21, qui peut présenter par exemple une capacité de l'ordre de 5 à 20 litres, et contient une réserve d'un liquide tel que de l'eau. Le liquide est appliqué sélectivement à l'installation à partir du réservoir 21 par un circuit comprenant une vanne 22, un filtre 23, un régulateur de débit 24, une pompe 25 et un clapet anti-retour 26. Un manomètre 28 est relié par une vanne 27 à la canalisation d'amenée de fluide vers un étage vaporisateur 30. L'ensemble 20 d'alimentation sélective en liquide comprend encore un drain 29, une vanne de purge et une vanne de liaison à un organe de repérage de niveau.

Un ensemble 10 d'alimentation en gaz sous pression, par exemple à des pressions de l'ordre de quelques MPa, comprend une canalisation 11 d'arrivée de gaz à partir d'une source extérieure, une vanne 12, un clapet anti-retour 13 et une conduite qui plonge à travers l'étage vaporisateur 30 pour déboucher dans un étage 40 de mélange entre les gaz injectés et la vapeur produite dans l'étage de vaporisation 30 à partir du liquide injecté.

Un manomètre 15 relié à la conduite 11 d'arrivée de gaz par l'intermédiaire d'une vanne 14 permet de contrôler la pression qui, selon une application à la corrosion généralisée à une température de l'ordre de 800°C peut être de 3 MPa.

Le mélange gaz-vapeur issu de l'étage mélangeur 40 est appliqué à un étage préchauffeur (50) pour préchauffer jusqu'à une température de l'ordre de 150°C à 300°C, par exemple à 200°C, le mélange gaz-vapeur issu de l'étage mélangeur 40.

Des thermocouples 31,41,51 permettent de contrôler la température dans les différents étages de l'ensemble de vaporisation et mélange 30,40,50.

Le préchauffeur 50 incorpore avantageusement une pièce 52 assurant une fonction de répartition d'écoulement pouvant être laminaire ou turbulent.

L'ensemble 60 comprend essentiellement un ensemble de canalisations, équipées de résistances électriques chauffantes 65, qui servent à transporter sélectivement le mélange gaz-vapeur préchauffé, à 200°C par exemple, vers les divers circuits d'essai individuels 70 proprement dits. L'ensemble 60 comprend des moyens 64 de contrôle de température et un dispositif de ventilation 63. Chaque canalisation conduisant à un circuit d'essai 70 comprend une vanne 61 et une vanne de purge 62.

Chaque circuit d'essai 70 proprement dit comprend une tête d'appareillage extérieure à un réacteur 72,73 et munie d'un circuit 71 de refroidissement par circulation de liquide afin de maintenir une température au plus égale à la température de sortie du préchauffeur 50, soit par exemple 200°C.

Le réacteur d'un circuit d'essai 70 comprend un étage préchauffeur intermédiaire 72 pour préchauffer jusqu'à une température de l'ordre de 400°C à 600°C, par exemple 500°C, le mélange gaz-vapeur appliqué au réacteur, et un étage de chauffage final 73, dans lequel est installé un ensemble d'échantillons 76 du matériau à tester. L'étage de chauffage final 73 est constitué par un four capable de porter la température du mélange gaz-vapeur mis en contact des échantillons 76, à une température de l'ordre de 700°C à 850°C, par exemple 800°C.

Des thermocouples 74,75 permettent de contrôler la température dans les zones 72 et 73 du réacteur.

En sortie de chaque réacteur 72,73, le mélange gaz-vapeur, porté à 800°C par exemple est, refroidi dans des serpentins 77 à refroidissment par air, puis envoyé par une vanne 78 à un deuxième circuit refroidisseur 91 commun à tous les circuits d'essai 70 et constituant un réfrigérant à circulation d'eau. Le mélange fluide refroidi est appliqué à un étage de séparation 90 et introduit dans un séparateur 92. La phase liquide est évacuée dans le fond du séparateur 92 par une vanne 93 de soutirage manuel, tandis que la phase gazeuse est évacuée à la partie supérieure du séparateur 92 vers un drain 96 et un régulateur de débit de gaz 97 conduisant à une sortie qui, dans le cas de la corrosion généralisée sous contrainte, n'est pas rebouclée sur l'entrée 11.

Un manomètre 95 relié par une vanne 94 au séparateur 92 permet un contrôle de la pression du mélange en cours de séparation.

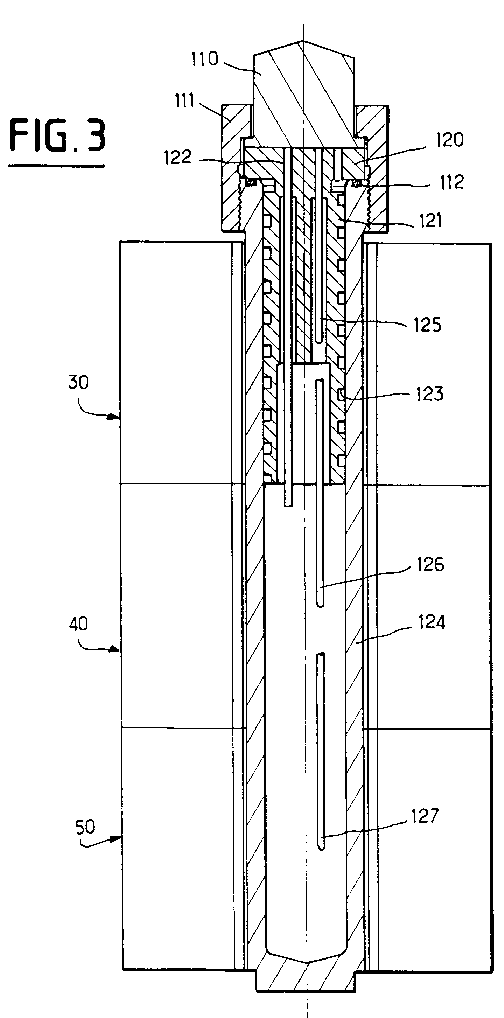

Certains des éléments constitutifs du schéma de la figure 1 seront décrits plus loin de façon plus détaillée en référence aux figures 3 à 10.

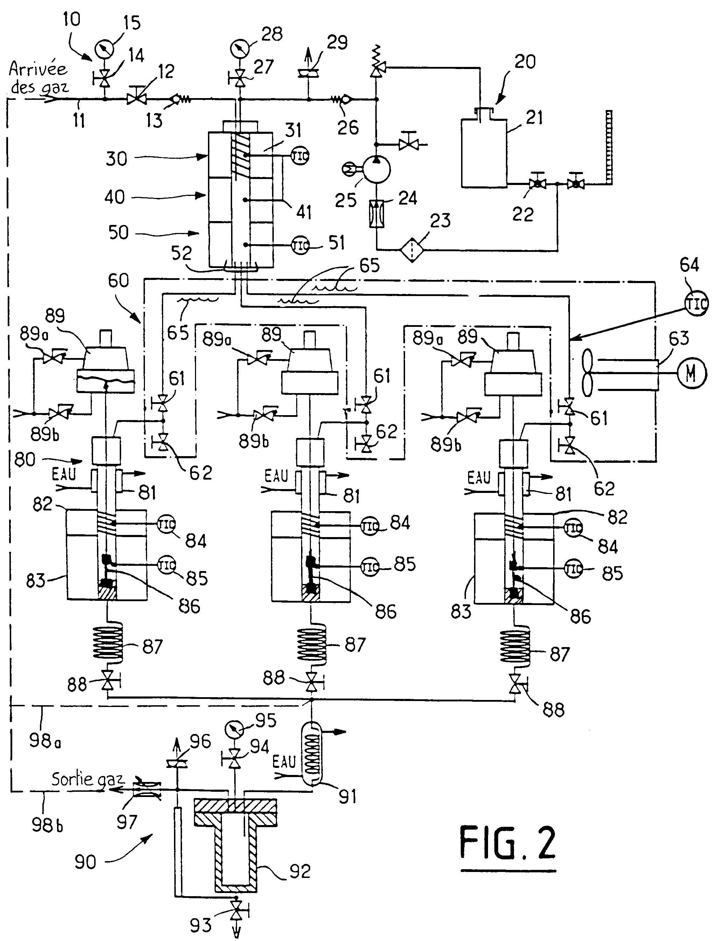

La figure 2 montre le schéma d'ensemble d'une installation d'essai de corrosion sous contrainte qui présente beaucoup de points communs avec l'installation de la figure 1 de sorte que les éléments communs portent les mêmes références et ne seront pas décrits de nouveau.

Ainsi, l'ensemble 10 d'alimentation sélective en gaz sous pression, l'ensemble 20 d'alimentation sélective en liquide, l'ensemble 30,40,50 de vaporisation de mélange et l'ensemble 60 de répartition du flux de mélange sont tout-à-fait identiques dans les schémas des figures 1 et 2, de même que le dispositif 90 de séparation gaz-liquide dans le cas d'un circuit d'application des gaz en boucle ouverte.

Le schéma de la figure 2 diffère par les circuits d'essai proprement dits 80 qui présentent quelques variantes par rapport aux circuits d'essai 70 de la figure 1 tout en présentant également de nombreux points communs.

Ainsi, la tête extérieure de chaque circuit d'essai 80 comprend un échangeur de chaleur 81 à circulation de fluide analogue à l'échangeur 71 de la figure 1.

Chaque réacteur 82,83 comprend un étage de chauffage intermédiaire 82 avec un thermocouple 84 de contrôle de température de façon analogue aux réacteurs 72,73 qui présentent deux étages 72,73 et sont munis de thermocouples 74,75. Les serpentins 87 de refroidissement à air et les vannes 88 correspondent également aux éléments 77 et 78 de la figure 1.

Le nombre des circuits d'essai 70,80 est égal à quatre dans l'exemple de la figure 1 est égale à trois dans celui de la figure 2. Des nombres différents peuvent être retenus, par exemple deux ou cinq.

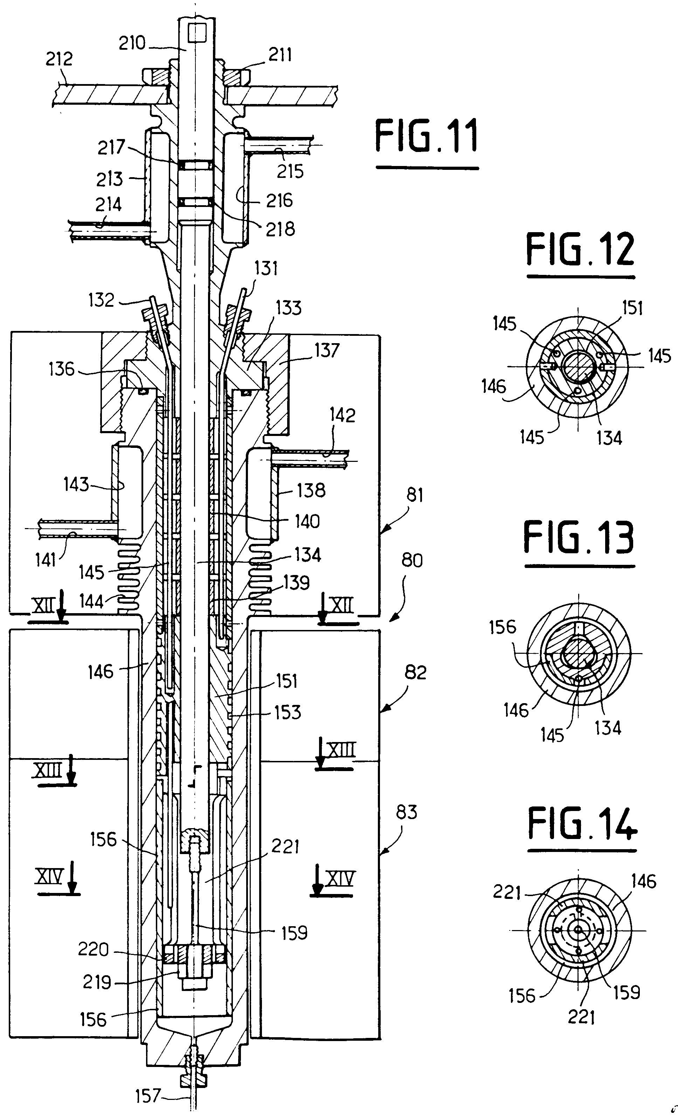

L'installation de la figure 2 diffère de celle de la figure 1 essentiellement par le fait que chaque réacteur 82,83 contient un échantillon unique 86 constitué par une éprouvette de traction soumise à des efforts contrôlés de traction exercés par un dispositif 89 qui surmonte le réacteur et comprend par exemple des servo-moteurs de traction 89a,89b pouvant agir vers le haut ou vers le bas. Ce mode de réalisation sera décrit plus loin de façon plus détaillée en référence aux figures 11 à 17.

Sur la figure 2, on note que le mélange gazeux refroidi dans les serpentins 87 pourrait être réinjecté sur l'entrée 11 des gaz pour constituer une boucle fermée représentée par des pointillés sur le dessin. Cette réinjection peut être effectuée à partir de la sortie de la vanne 88 (boucle 98a) ou à partir de la sortie située en aval du régulateur 97 (trajet 98b).

La figure 3 montre en coupe axiale un exemple de dispositif de vaporisation et de mélange 30,40,50. L'étage vaporisateur 30 présente un corps 121 dont la partie périphérique définit un pas de vis hélicoïdal avec des passages 123 pour le liquide à vaporiser. Le corps 121 est lui-même traversé par un canal axial 122 pour le transfert des gaz sous pression choisis pour créer des conditions d'environnement sévères. Ces gaz peuvent être des gaz agressifs tels que le chlore ou l'oxygène par exemple. Des passages axiaux supplémentaires sont prévus pour le passage de thermocouples 125 à 127.

La liaison entre les ensembles 10 et 20 d'alimentation en gaz et en liquide et le vaporisateur 30 est effectuée par une entretoise 110 maintenue appliquée par un écrou 111 sur la tête 120 du bouchon constituant le corps 121 du vaporisateur. Un joint torique 112 est interposé entre la tête 120 du corps du vaporisateur 30 et le corps 124 en forme de doigt de gant qui est commun à l'ensemble des étages de vaporisation 30, de mélange 40 et de préchauffage 50.

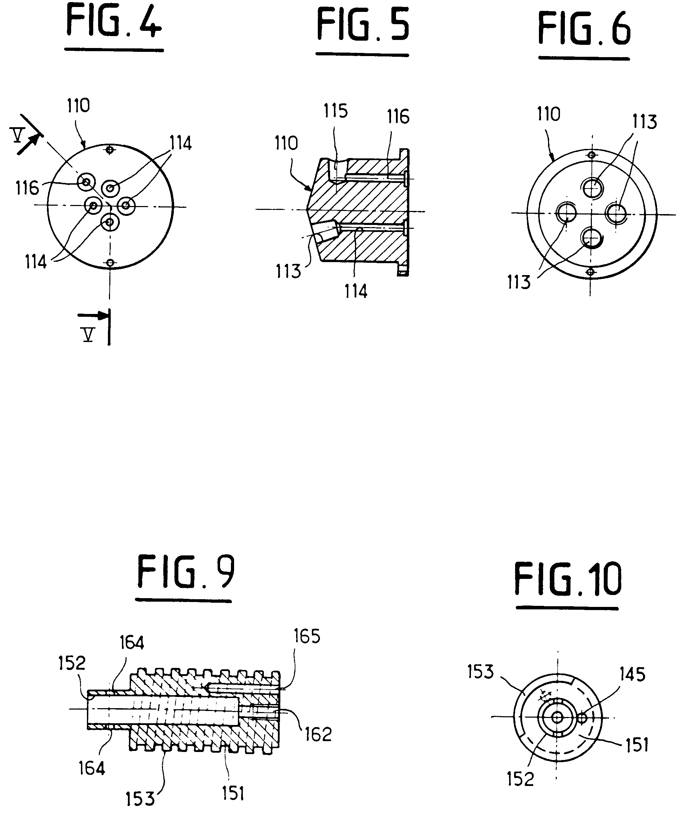

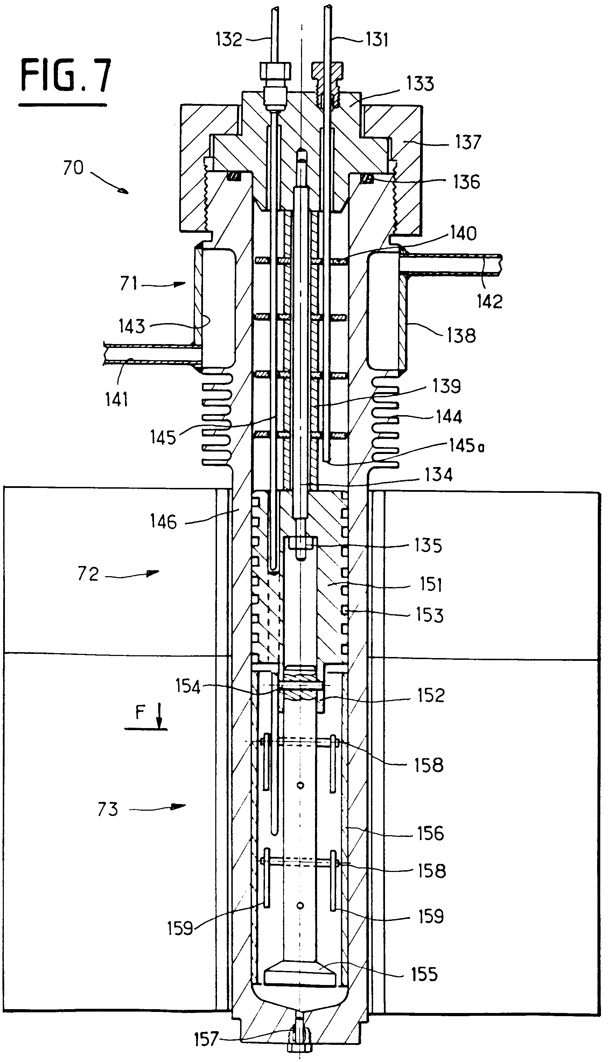

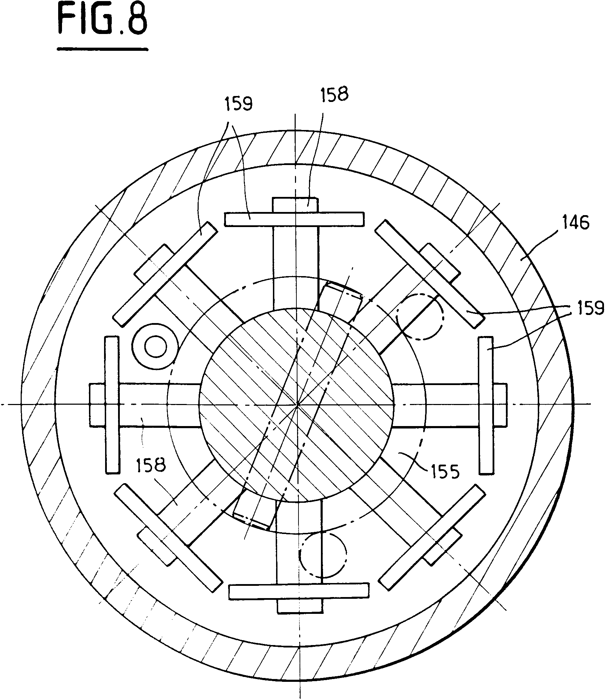

Les figures 4 à 6 montrent de façon plus précise les canaux 114 d'application du gaz à travers l'entretoise 110, et de passage des thermocouples 125 à 127, et le canal 116 d'application du liquide dans cette entretoise 110. On voit que la canalisation d'amenée de gaz et les câbles de connexion des thermocouples peuvent se raccorder dans les logements 113 ménagés sur les faces inclinées supérieures de l'entretoise tandis que la canalisation d'alimentation en liquide se raccorde latéralement dans un logement 115.

La figure 7 montre un exemple de réacteur de corrosion généralisée. Ce réacteur comprend un corps 146 en forme de doigt de gant qui peut être inséré manuellement sans outillage particulier dans le logement ménagé dans l'étage intermédiaire de préchauffage 72 et dans le four proprement dit à haute température 73.

La partie inférieure du corps 146 est munie du côté interne, d'une garniture en céramique 156 qui s'étend sur toute la partie à très haute température. Le corps 146 présente par ailleurs un orifice 157 ménagé dans le fond pour une évacuation du mélange gaz-vapeur ayant balayé les échantillons 159 qui sont placés sur un porte-échantillons 155. Comme représenté sur la figure 8, les échantillons 159 sont avantageusement répartis en hélice autour du support 155. Des goupilles 158 maintiennent les échantillons en position. Le porte-échantillons 155 est lui-même suspendu par un axe 154 engagé dans des trous 164 formés à la partie inférieure 152 du corps 151 d'un dispositif réchauffeur de l'étage intermédiaire de préchauffage 72 qui présente un filetage externe ménageant des passages en hélice 153 pour le mélange gazeux. Comme cela est représenté sur les figures 9 et 10, le dispositif réchauffeur est traversé par des canaux axiaux 145, 165 pour le passage de thermocouples destinés à la mesure de température dans les zones 72 et 73 du réacteur. Un canal axial 162 formé à la partie supérieure du corps 151 sert au passage de l'extrémité inférieure d'un tirant 134 muni d'un écrou 135, qui fixe le réchauffeur 151 et le support d'échantillons 155 sur une bride supérieure 133 rapportée sur la face supérieure du corps de réacteur 146 avec interposition d'un joint 136 et immobilisée par un écrou 137. La bride 133 porte des bornes de connexion pour des fils 131, 132 de raccordement aux sondes de mesure de température disposés dans les zones 72 et 73 ainsi que dans une zone 145a située juste avant la pénétration du corps 146 dans l'étage 72.

Dans sa partie externe par rapport à l'étage de préchauffage intermédiaire 72, le réacteur comprend un circuit 71 de refroidissement par circulation de liquide avec une virole extérieure 138 ménageant un espace annulaire 143 avec le corps 146 et des tuyauteries d'entrée 141 et de sortie 142 de liquide. Des ailettes de refroidissement 144 sont avantageusement formées sur le corps 146 sous l'échangeur 71.

Une entretoise 139, traversée par le tirant 134, est interposée entre le corps 151 de réchauffeur et la bride 133. Des rondelles 140 munies d'orifices pour le passage du fluide gazeux sont réparties entre le corps de réchauffeur 151 et la bride 133.

Les figures 11 à 14 montrent un circuit d'essai 80 adapté à l'étude de la corrosion sous contrainte.

Dans ce cas, le tirant 134 de la figure 7 est remplacé par un tirant 134 qui se prolonge vers le haut jusqu'à un arbre 210 de sortie d'un mécanisme de traction, et vers le bas jusqu'à l'extrémité supérieure d'un échantillon unique 159 réalisé sous la forme d'une éprouvette de traction, dont la partie inférieure est fixée par une clavette 219 et une rondelle 220 à l'extrémité d'entretoises 221 interposées entre l'extrémité inférieure de l'éprouvette 159 et la partie inférieure du corps de réchauffeur 151. Les autres parties constitutives des étages 81, 82 et 83 sont semblables à celles qui ont été décrites en référence à la figure 7 et portent donc les mêmes références.

L'extrémité supérieure du tirant 134 de la figure 11 porte deux joints toriques 217, 218 et traverse un échangeur supplémentaire de chaleur à circulation de liquide avec une virole 213 définissant une chambre annulaire 216 et des tuyauteries d'entrée et sortie 214, 215. Cet échangeur supplémentaire est fixé par un écrou 211 sur une plaque 212.

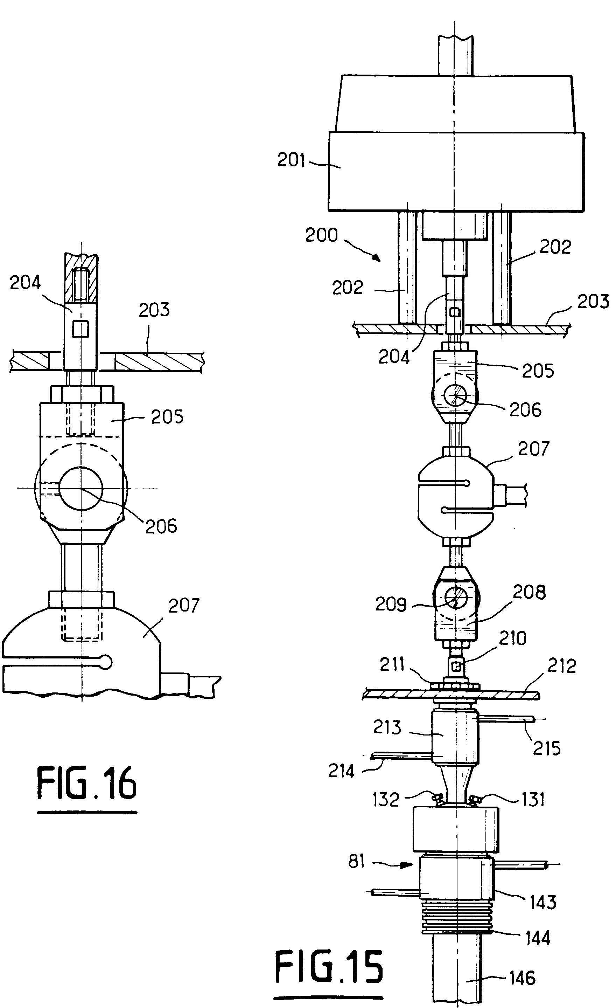

Les figures 15 et 16 montrent un dispositif de traction 200 comprenant un ensemble de servo-moteurs 201 montés par des pieds 202 sur un bâti 203 et exerçant un effort de traction réglable sur un tirant 204 qui peut aussi incorporer un capteur d'allongement.

Un capteur de force 207 est monté entre le tirant 204 et l'arbre 210 par des articulations comprenant chacune une chape 205, 208 et un axe 206, 209.

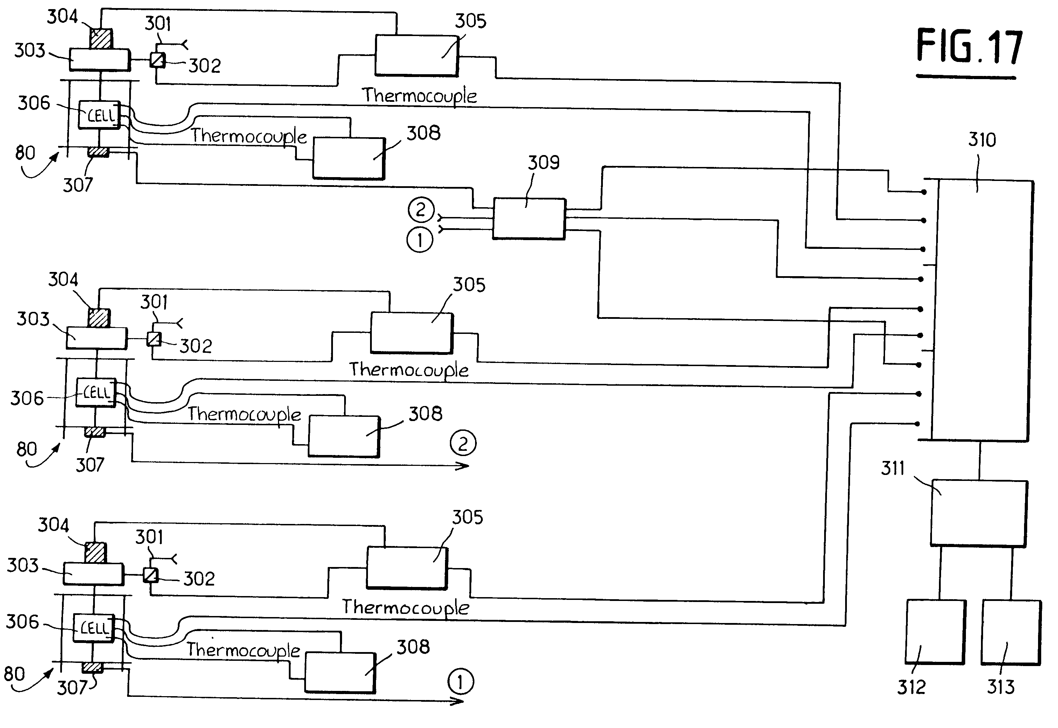

La figure 17 montre le schéma électrique d'un exemple d'utilisation d'une installation d'essai de corrosion sous contrainte à trois circuits d'essai et donc trois cellules de mesure.

On a représenté schématiquement sur la figure 17 la cellule de mesure 306 comprenant une éprouvette telle que l'éprouvette 86 de la figure 2 ou l'échantillon 159 de la figure 11 placés dans un réacteur à haute température 80. La référence 303 désigne un mécanisme de traction avec les servo-moteurs 302 alimentés en air comprimé par une source 301. Les références 304 et 307 désignent respectivement un capteur de déplacement c'est à dire d'allongement et un capteur d'effort. Les capteurs d'effort 307 sont alimentés à partir d'une source d'alimentation 309 tandis que chaque capteur de déplacement 304 est alimenté par un dispositif de commande de déplacement 305 qui délivre une rampe de tension de façon à exercer une contrainte progressive avec une vitesse lente prédéterminée, sur l'éprouvette de mesure 306.

Des dispositifs de mesure de température tels que des thermocouples et les moyens de chauffage du four sont reliés à un circuit 308 de commande de la température.

Pour chaque cellule de mesure, des informations relatives à la température au niveau de la cellule, à l'effort mesuré par le capteur d'effort 307 et au déplacement mesuré par le capteur de déplacement 304 sont fournis à un circuit 310 d'acquisition de données qui est lui-même relié à des circuits 311 de calcul et de traitement de données connectés à des moyens d'impression 312 ou à un traceur de courbes 313.

## Revendications

1. Installation d'essai de corrosion généralisée à haute température, caractérisée en ce qu'elle comprend un ensemble (20) d'alimentation sélective en liquide, un ensemble (10) d'alimentation sélective en gaz sous pression, un ensemble (30,40,50) de mélange et préchauffage comprenant lui-même un étage vaporisateur (30) pour vaporiser le liquide reçu de l'ensemble d'alimentation en liquide (20), un étage mélangeur (40) pour réaliser un mélange des gaz sous pression reçus dans l'ensemble (10) d'alimentation en gaz et de la vapeur produite dans ledit étage vaporisateur (30) et un étage préchauffeur (50) pour préchauffer jusqu'à une température de l'ordre de 150°C à 300°C le mélange gaz-vapeur issu dudit étage mélangeur (40), un ensemble (60) de répartition du flux de mélange gaz-vapeur issu de l'étage préchauffeur (50) vers une pluralité de circuits (70,80) d'essai de corrosion généralisée à haute température, chacun desdits circuits d'essai (70,80) comprenant un réacteur comportant un étage préchauffeur intermédiaire (72,82) pour préchauffer jusqu'à une température de l'ordre de 400°C à 600°C le mélange gaz-vapeur appliqué au réacteur, et un étage de chauffage final (73;83) contenant au moins un échantillon (76;159) de matériau à tester qui est mis en contact avec le flux de mélange gaz-vapeur issu de l'étage préchauffeur intermédiaire (72;82) et porté dans l'étage de chauffage final (73) à une température comprise entre environ 700°C et 850°C, des moyens (77,91) de refroidissement du mélange gaz-vapeur issu de chacun des circuits d'essai (70;80) et un dispositif (90) de séparation pour récupérer séparément la phase liquide et la phase gazeuse dudit mélange gaz-vapeur.

2. Installation d'essai selon la revendication 1, caractérisée en ce que l'ensemble de répartitions (60) comprend un dispositif amovible (52) de répartition disposé à la sortie de l'étage préchauffeur (50) pour produire un écoulement laminaire ou turbulent.

3. Installation d'essai selon la revendication 1 ou 2, caractérisée en ce que l'ensemble de répartition (60) comprend une série de canalisation de dérivation en nombre égal au nombre de circuits d'essai (70), munies de résistances électriques chauffantes (65) et de vannes d'arrêt (61) et de purge (62).

4. Installation selon l'une quelconque des revendications 1 à 3, caractérisée en ce qu'elle comprend des échangeurs de chaleur (71;81) à circulation de liquide disposés entre l'ensemble de répartition (60) et les réacteurs (72,73;82,83) pour refroidir la partie amovible des circuits d'essai (70;80) externe aux réacteurs (72,73;82,83) à une température inférieure à environ 200°C.

5. Installation selon l'une quelconque des revendications 1 à 4, caractérisée en ce que chaque réacteur (72,73;82,83) comprend un corps unique (146) en forme de doigt de gant intégrant l'étage préchauffeur intermédiaire (72;82) et l'étage de chauffage final (73;83) et dans lequel les divers éléments constitutifs sont introduits par le haut.

6. Installation selon l'une quelconque des revendications 1 à 5, caractérisée en ce que chaque réacteur (72,73;82,83) comprend au niveau de l'étage de chauffage final (73;83) une garniture (156) en céramique.

7. Installation selon l'une quelconque des revendications 1 à 6 caractérisée en ce que l'étage de chauffage final (73) de chaque réacteur (72,73) comprend un porte-échantillons (76;155) sur lequel les échantillons (159) sont disposés selon une structure en hélice.

8. Installation selon l'une quelconque des revendications 1 à 6, caractérisée en ce que l'étage de chauffage final (83) de chaque réacteur (82,83) comprend un échantillon unique (86) constitué par une éprouvette de traction et en ce que des moyens de traction (89) sont prévus dans chaque circuit d'essai (80) pour appliquer une contrainte prédéterminée sur chaque éprouvette de traction (86).

9. Installation selon la revendication 8, caractérisée en ce qu'elle comprend des capteurs de force (307) et d'allongement (304) dans chaque circuit d'essai (80) pour contrôler la traction et l'allongement exercés sur chaque éprouvette de traction (86,306).

10. Installation selon la revendication 9, caractérisé en ce que lesdits moyens de traction (8) comprennent des servo-moteurs de traction (302;303) et un générateur de rampe de tension (305) pour engendrer de façon contrôlée une rampe de contrainte continue à vitesse lente sur l'éprouvette de traction concernée (306).

11. Installation selon l'une quelconque des revendications 8 à 10, caractérisée en ce qu'elle comprend une boucle fermée de recyclage des gaz appliqués à partir dudit ensemble (10) d'alimentation sélective en gaz sous pression.

12. Installation selon l'une quelconque des revendications 1 à 11, caractérisée en ce que lesdits moyens (77,91) de refroidissement du mélange gaz-vapeur issu de chaque circuit d'essai (70) comprennent des serpentins de refroidissement à air (77,87) placés en sortie de chaque réacteur et un circuit réfrigérant commun (91) à circulation d'eau.

13. Installation selon l'une quelconque des revendications 1 à 12, caractérisée en ce que l'étage vaporisateur (30) présente une structure en hélice pour le passage du liquide et des canaux axiaux pour le passage des gaz.

14. Installation selon l'une quelconque des revendications 1 à 13, caractérisée en ce qu'elle comprend entre trois et cinq circuits d'essai (70;80).

15. Installation selon l'une quelconque des revendications 1 à 14, caractérisée en ce que l'étage préchauffeur (50), l'étage préchauffeur intermédiaire (72;82) et l'étage de chauffage final (73;83) sont adaptés pour porter le mélange gaz-vapeur à des températures respectivement de l'ordre de 200°C, 500°C et 800°C.

**FIG.1**

FIG. 2

## FIG. 3

# FIG.4

110

V

116

114

114

# FIG.5

115    116

110

113    114

# FIG.6

110    113

113

113

# FIG.9

164    165

152

164    162

153    151

# FIG.10

153    145

152    151

FIG.7

# FIG.8

FIG.11

FIG.12

FIG.13

FIG.14

FIG.16

FIG.15

15

FIG.17

EP 0 494 000 A1

EP 0 494 000 A1

**Office européen des brevets**

# RAPPORT DE RECHERCHE EUROPEENNE

Numero de la demande

EP 91 40 3437

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | PATENT ABSTRACTS OF JAPAN<br>vol. 12, no. 240 (P-727)(3087) 8 Juillet 1988<br>& JP-A-63 032 348 ( JGC CORP ) 12 Février 1988<br>* abrégé * | 1,11 | G01N17/00 |
| A | IBM TECHNICAL DISCLOSURE BULLETIN<br>vol. 17, no. 8, Janvier 1975, NEW YORK<br>pages 2426 - 2427;<br>D. W. RICE ET AL.: 'multiconcentration low-cost enviromental system'<br>* le document en entier * | 1,2,14 | |
| A | EP-A-0 194 727 (EURATOM)<br>* abrégé *<br>* page 4, ligne 6 - ligne 8 *<br>* page 4, ligne 12 - ligne 19 *<br>* page 5, ligne 12 - ligne 19; figure 1 * | 1,6 | |

DOMAINES TECHNIQUES RECHERCHES (Int. Cl.5)

G01N

Le présent rapport a été établi pour toutes les revendications

| Lieu de la recherche | Date d'achèvement de la recherche | Examinateur |
|---|---|---|
| LA HAYE | 26 FEVRIER 1992 | KEMPF G.V. |